# EUROPÄISCHE PATENTSCHRIFT

(11) **EP 2 956 681 B1**
(45) Veröffentlichungstag und Bekanntmachung des Hinweises auf die Patenterteilung: **05.04.2017**
(21) Anmeldenummer: 15705004.8
(22) Anmeldetag: 10.02.2015
(51) Int. Cl.: F16B 25/00, B21K 25/00, B21K 1/44

(54) **ZWEISTAHLSCHRAUBE MIT FLIESSPRESSVERBINDUNG UND VERFAHREN ZUR HERSTELLUNG SOLCHER SCHRAUBE**
TWO-STEEL SCREW WITH AN EXTRUSION CONNECTION AND METHOD FOR PRODUCING SAID SCREW
VIS COMPOSÉE DE DEUX ACIERS À ASSEMBLAGE PAR EXTRUSION ET PROCÉDÉ DE PRODUCTION D'UNE VIS DE CE TYPE

(30) Priorität: 12.03.2014 DE 102014204598
(43) Veröffentlichungstag der Anmeldung: 23.12.2015
(73) Patentinhaber: EJOT GmbH & Co. KG, 57319 Bad Berleburg (DE)
(72) Erfinder: GROTMANN, Dieter, 57339 Erndtebrueck (DE); KETTNER, Tobias, 57339 Erndtebrueck-Birkelbach (DE)
(74) Vertreter: DREISS Patentanwälte PartG mbB
(86) Internationale Anmeldenummer: PCT/EP2015/052762
(87) Internationale Veröffentlichungsnummer: WO 2015/135710

(56) Entgegenhaltungen:
- EP-A1- 1 450 054
- EP-A1- 1 564 423
- EP-A1- 2 080 916
- AU-A1- 2009 201 409
- DE-A1-102011 053 384
- DE-C1- 10 033 471

## Beschreibung

Die Erfindung betrifft eine Zweistahlschraube, mit einem Kopfteil und mit einem Schneidteil, wobei der Kopfteil aus einem korrosionsbeständigen Werkstoff hergestellt ist und einen Schraubenkopf und einen Schaftabschnitt aufweist und wobei der Schneidteil aus einem härtbaren Werkstoff hergestellt ist.

Die Erfindung betrifft ferner ein Verfahren zum Herstellen einer Zweistahlschraube bestehend aus einem Kopfteil aus korrosionsbeständigem Werkstoff, der einen Schraubenkopf und einen Schaftabschnitt aufweist, und einen Schneidteil aus einem härtbaren Werkstoff.

Solche Zweistahlschrauben, sowie Verfahren zum Herstellen derartige Zweistahlschrauben sind aus dem Stand der Technik vielfach bekannt. So ist es insbesondere aus der Gebäudetechnik bekannt, Zweistahlschrauben vorzusehen, welche einen rostfreien Kopfteil für eine Gebäudeaußenseite aufweisen, sodass dieser Kopfteil keiner Korrosion beziehungsweise keinem Rost ausgesetzt ist. Ferner weisen die aus dem Stand der Technik bekannten Zweistahlschrauben am Schneidteil einen gehärteten Teil mit einer Stahlbohrspitze auf, sodass einerseits eine der Witterung ausgesetzte rostfreie Außenseite der Zweistahlschraube bereit gestellt werden kann, wohingegen der gehärtete vordere Teil eine Bohrspitze bereitstellt.

Zur Verbindung des Kopfteils mit dem Schneidteil ist es aus dem Stand der Technik bekannt, die beiden Teile zu Verkleben, die beiden Teile zu Verschweißen oder zu Verschrauben. Dabei kann vorgesehen sein, dass sowohl der Kopfteil, als auch der Schneidteil jeweils ein Innengewinde aufweisen und die beiden Teile mit einem Gewindestift verbunden sind.

Bei den aus dem Stand der Technik bekannten Zweistahlschrauben hat es sich jedoch gezeigt, dass der Kopfteil und der Schneidteil nicht immer zuverlässig miteinander verbunden werden können. Ferner ist es zum Herstellen eines Gewindes am Schaft der Zweistahlschraube erforderlich, dass Kopfteil und Schneidteil axial fluchtend zueinander angeordnet sind. Auch hier treten in der Praxis hohe Abweichungen auf. Folglich haben die aus dem Stand der Technik bekannten Zweistahlschrauben und Verfahren zum Herstellen solcher Zweistahlschrauben hohe Ausschussquoten und einen hohen Prüfaufwand zur Folge. Die EP 2 080 916 A1 zeigt eine Schraube nach dem Oberbegriff des Anspruchs 1.

Die Erfindung stellt sich daher die Aufgabe, eine Zweistahlschraube, sowie ein Verfahren zum Herstellen einer Zweistahlschraube bereit zu stellen, wobei der Kopfteil und der Schneidteil einfach und zuverlässig miteinander verbunden werden sollen.

Die eingangs genannte Aufgabe wird mit einer Zweistahlschraube mit den Merkmalen des Anspruchs 1 gelöst. Weitere vorteilhafte Ausgestaltungen der Zweistahlschraube ergeben sich aus den Unteransprüchen. Demgemäß ist vorgesehen, dass der Kopfteil im Bereich des Schaftabschnitts mit dem Schneidteil durch Fließpressen dauerhaft verbunden ist. Wenn der Schneidteil im Bereich des Schaftabschnitts mit dem Kopfteil verbunden ist, bilden der Schaftabschnitt und der Schneidteil gemeinsam den Schraubenschaft. Auf den Schraubenschaft kann dann beispielsweise ein Gewinde aufgebracht werden. Vorzugsweise ist der Kopfteil dabei aus Edelstahl hergestellt, wohingegen der Schneidteil vorzugsweise aus gehärtetem Stahl hergestellt ist. Besonders bevorzugt ist es dabei wenn der Kopfteil mit dem Schneidteil mittels eines Querfließprozesses verbunden ist.

Erfindungsgemäß ist vorgesehen, dass der Schneidteil einen zapfenartigen Vorsprung aufweist und dass der Kopfteil am Schaftabschnitt eine napfartige Aussparung aufweist, wobei der zapfenartige Vorsprung in der napfartigen Aussparung angeordnet ist und den Kopfteil im Bereich der napfartigen Aussparung zumindest abschnittsweise axial hinterschneidet. Eine solche axiale Hinterschneidung kann insbesondere durch einen Querfließprozess erreicht werden, wobei der Werkstofffluss quer zur Wirkrichtung der Pressmaschine erfolgen kann.

Vorteilhafterweise sind die napfartige Aussparung und der zapfenartige Vorsprung jeweils an einer senkrecht zu einer Mittellängsachse der Schraube angeordneten Stirnseite des Kopfteils beziehungsweise des Schneidteils angeordnet.

Besonders bevorzugt ist es ferner, wenn der zapfenartige Vorsprung die napfartige Aussparung vollständig ausfüllt. Somit kann bei einer erfindungsgemäßen Zweistahlschraube eine formschlüssige Verbindung des Kopfteils mit dem Schneidteil bereitgestellt werden.

Weiterhin ist es vorteilhaft, wenn der Schneidteil gehärtet, insbesondere einsatzgehärtet ist und eine Bohrspitze aufweist.

Erfindungsgemäß ist ferner vorgesehen, dass die napfartige Aussparung im Querschnitt ein (Mitnahme-) Profil mit mehreren, vorzugsweise mit drei Mitnahmeabschnitten aufweist. Vorteilhafterweise erstrecken sich die Mitnahmeabschnitte in der napfartigen Aussparung radial nach innen. Durch den Fließpressprozess, beziehungsweise durch den Querfließpressprozess kann dann eine Hinterschneidung zwischen Schneidteil und Kopfteil, beziehungsweise zwischen dem zapfenartigen Vorsprung und der napfartigen Aussparung bereitgestellt werden, sodass der Kopfteil und der Schneidteil in axialer Richtung, das heißt in Richtung der Längsachse der Schraube, sicher verbunden sind.

Durch das Vorsehen des Mitnahmeprofils mit den Mitnahmeabschnitten kann ferner auch eine Drehmomentübertragung vom Kopfteil auf den Schneidteil bereitgestellt werden. Somit kann mit einer erfindungsgemäßen Zweistahlschraube der Kopfteil mit dem Schneidteil sowohl in axialer, als auch in radialer Richtung zuverlässig und einfach verbunden werden.

Besonders bevorzugt ist es dabei, wenn zwischen den Mitnahmeabschnitten jeweils Kreisabschnitte vorgesehen sind. Folglich weist das Mitnahmeprofil, wenn drei Mitnahmeabschnitten vorgesehen sind, auch drei Kreisabschnitte auf. Dabei können die Kreisabschnitte vorteilhafterweise radial außen an den Mitnahmeabschnitten in der napfartigen Aussparung angeordnet sein.

Weiterhin ist es vorteilhaft, wenn die Mitnahmeabschnitte und die Kreisabschnitte in einem Winkel von etwa 120 Grad zueinander im Umfang der napfartigen Aussparung angeordnet sind.

Eine weitere vorteilhafte Ausgestaltung der Zweistahlschraube sieht vor, dass die napfartige Aussparung im Bereich der Kreisabschnitte einen ersten Radius und im Bereich der Mitnahmeabschnitte einen zweiten, sich verringernden Radius aufweist, der kleiner ist als der erste Radius. Insbesondere können die Mitnahmeabschnitte als umgekehrte, sich hin zur Mitte der Aussparung nach radial innen erstreckende Kreisabschnitte ausgebildet sein.

Die eingangs genannte Aufgabe wird auch gelöst durch ein Verfahren zum Herstellen einer Zweistahlschraube mit den Merkmalen des Anspruchs 9. Ein solches Verfahren umfasst die folgenden Schritte: Einpressen einer napfartigen Aussparung mit einer vorgegebenen Tiefe in den Kopfteil im Bereich des Schaftabschnitts; Herstellen des Schneidteils mit einem zapfenartigen Vorsprung mit einer Länge, die größer ist als die Tiefe der Aussparung; Einführen des Vorsprungs in die Aussparung und Verbinden des Kopfteils und des Schneidteils mittels Fließpressen, sodass der zapfenartige Vorsprung die napfartige Aussparung vollständig ausformt. Besonders bevorzugt ist es dabei, wenn als Fließprozess ein Querfließprozess zum Einsatz kommt.

Beim Herstellen des Schneidteils kann dieser vorteilhafterweise mit einem Fließpressverhältnis von maximal 65 % fließgepresst werden. Nach dem Verbinden, das heißt wenn der zapfenartige Vorsprung die napfartige Aussparung vollständig ausformt, sieht das erfindungsgemäße Verfahren vor, dass der zapfenartige Vorsprung die napfartige Aussparung dabei zumindest abschnittsweise axial hinterschneidet. Da der zapfenartige Vorsprung vor dem Verbinden eine Länge aufweist, die größer ist als die Tiefe der napfartigen Aussparung kann Werkstoff des Schneidteils bei dem axialen Verlagern während des Fließprozesses in radialer Richtung in die napfartige Aussparung ausweichen. Somit können bauchige sich nach radial außen erstreckende Abschnitte am zapfenartigen Vorsprung bei einer fertig verbundenen Schraube hergestellt werden. Mit diesen bauchigen Vorsprüngen kann die Hinterschneidung bereitgestellt werden, wodurch der Kopfteil mit dem Schneidteil in axialer Richtung sicher formschlüssig verbunden ist.

Eine vorteilhafte Weiterbildung des Verfahrens sieht vor, dass die napfartige Aussparung in einem Flächenverhältnis von etwa 50 % bis etwa 75 % zu einer Querschnittsfläche des Schaftabschnitts in den Kopfteil eingepresst wird. Es hat sich gezeigt, dass bei einem solchen Flächenverhältnis eine besonders zuverlässige Verbindung des Kopfteils mit dem Schneidteil bereitgestellt werden kann.

Weiterhin ist es vorteilhaft, wenn beim Herstellen des Schneidteils der zapfenartige Vorsprung kreiszylindrisch hergestellt wird. Der Vorsprung ist dabei vorteilhafterweise an seiner Umfangsfläche glatt ausgebildet. Der Durchmesser des kreiszylindrischen Vorsprungs wird vorzugsweise so gewählt, dass dieser kleiner oder gleich dem kleinsten Innendurchmesser der napfartigen Aussparung ist. Somit kann der Vorsprung einfach in die napfartige Aussparung einführt werden, bevor der Fließprozess erfolgt.

Das erfindungsgemäße Verfahren sieht vor, dass beim Einpressen der napfartigen Aussparung ein Mitnahmeprofil mit Mitnahmeabschnitten in den Kopfteil eingepresst wird. Besonders bevorzugt ist es dabei, wenn sich die Mitnahmeabschnitte nach radial innen erstrecken, sodass diese nach dem Verbinden durch Fließpressen zur Verbesserung der Drehmomentübertragung zwischen Kopfteil und Schneidteil genutzt werden können.

Eine weitere vorteilhafte Weiterbildung des Verfahrens sieht vor, dass nach dem Verbinden des Kopfteils und des Schneidteils ein Gewinde auf den Schaftabschnitt und den Schneidteil aufgerollt wird. Besonders bevorzugt ist es dabei, wenn durch das Gewinderollen die Verbindung zwischen Kopfteil und Schneidteil weiter verbessert wird.

Besonders bevorzugt ist es, wenn der Kopfteil und der Schneidteil vor dem Verbinden axial fluchtend angeordnet werden. Dabei kann vorgesehen sein, dass der Kopfteil und der Schneidteil beim Anordnen in einer Pressmatrize durch die Pressmatrize fluchtend angeordnet werden.

Weiterhin ist es vorteilhaft, wenn das Herstellen des Schneidteils und das Verbinden mit dem Kopfteil in einer Mehrstufenpresse durchgeführt werden.

Weitere Einzelheiten und vorteilhafte Weiterbildungen der Erfindung ergeben sich aus der nachfolgenden Beschreibung, anhand derer die in den Figuren gezeigten Ausführungsformen der Erfindung näher beschrieben und erläutert sind.

Es zeigen:
Figur 1 eine fließgepresste Zweistahlschraube;
Figur 2 einen Kopfteil für die fließgepresste Zweistahlschraube gemäß Figur 1;
Figur 3 einen Schneidteil für die fließgepresste Zweistahlschraube gemäß Figur 1;
Figur 4 fluchtend angeordnete Kopf- und Schneidteile der Zweistahlschraube gemäß Figur 1 vor dem Fließpressprozess;
Figur 5 eine Detailansicht eines Kopfteils und eines Schneidteils zu Beginn eines Fließpressprozesses;
Figur 6 eine Detailansicht einer Fließpressverbindung nach dem Fließpressprozess; und
Figur 7 eine napfartige Aussparung des Kopfteils gemäß Figur 2.

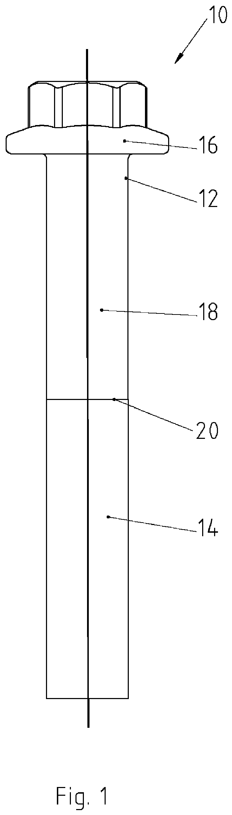

Figur 1 zeigt eine Zweistahlschraube 10, wobei die Zweistahlschraube 10 einen Kopfteil 12 und einen Schneidteil 14 aufweist. Der Kopfteil 12 weist ferner einen Schraubenkopf 16 sowie einen Schaftabschnitt 18 auf. Der Kopfteil 12 und der Schneidteil 14 sind mittels eines Fließprozesses im Bereich eines Stoßes 20 miteinander verbunden.

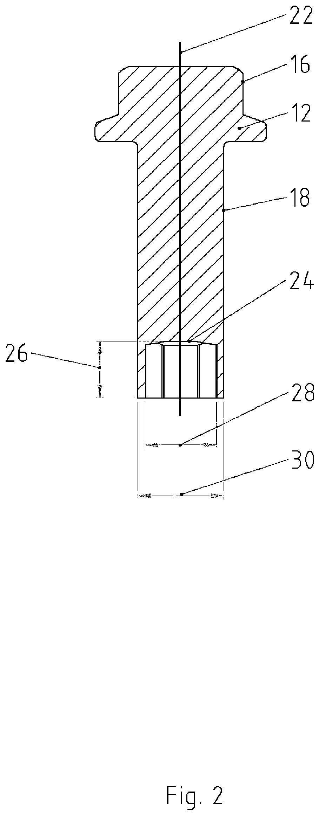

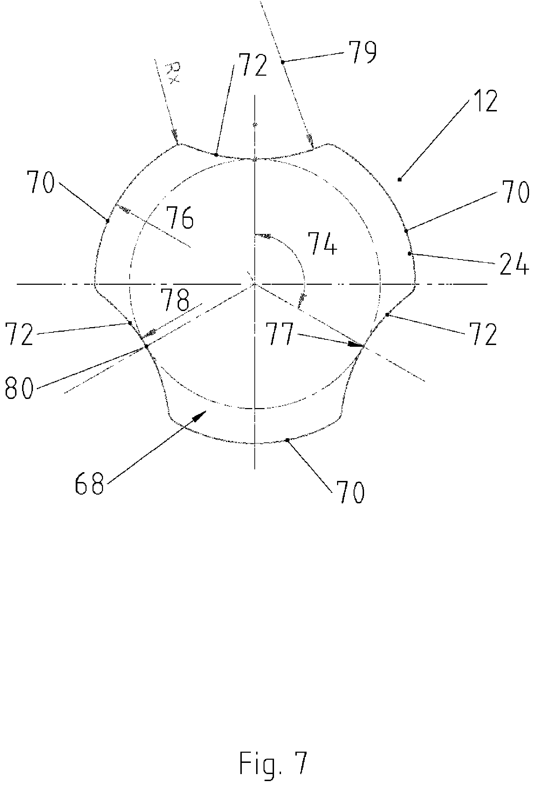

Figur 2 zeigt den Kopfteil 12 der in Figur 1 gezeigten Zweistahlschraube 10. Der Schraubenkopf 16 sowie der Schaftabschnitt 18 sind dabei deutlich zu erkennen. Der Schraubenkopf 16 und der Schaftabschnitt 18 sind konzentrisch zu einer Mittellängsachse 22 angeordnet. Auf der dem Schraubenkopf 16 abgewandten Seite weist der Kopfteil 12 eine napfartige Aussparung 24 auf. Diese napfartige Aussparung weist eine Tiefe 26 auf, welche sich in axialer Richtung, das heißt in Richtung der Längsachse 22 erstreckt. Die napfartige Aussparung 24 weist in Figur 2 ferner einen Durchmesser 28 auf. Der Schaftabschnitt 18 des Kopfteils 12 ist als Kreiszylinder ausgebildet und weist einen Durchmesser 30 auf. Die napfartige Aussparung 24 ist vorzugsweise mittels eines Pressprozesses in den Schaftabschnitt 18 des Kopfteils 12 eingebracht. Vorteilhafterweise weist die napfartige Aussparung 24 ein in Figur 7 gezeigtes Mitnahmeprofil auf, welches weiter unten unter Bezugnahme auf Figur 7 noch näher beschreiben und erläutert wird.

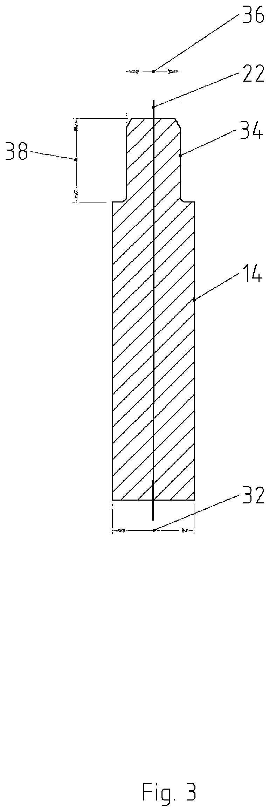

Figur 3 zeigt einen Schneidteil 14 der in Figur 1 dargestellten Zweistahlschraube 10. Der Schneidteil 14 weist einen Durchmesser 32 auf, welcher in etwa dem Durchmesser 30 des Schaftabschnitts 18 des Kopfteils 12 entspricht. Der Schneidteil 14 weist ferner einen zapfenartigen Vorsprung 34 auf. Der zapfenartige Vorsprung 34 und der Schneidteil 14 sind konzentrisch zur Längsachse 22 angeordnet. Im Bereich des zapfenartigen Vorsprungs 34 weist der Kopfteil 12 einen Durchmesser 36 auf. Ferner weist der zapfenartige Vorsprung 34 in Richtung der Längsachse 22 eine Länge 38 auf.

Die Länge 38 des zapfenartigen Vorsprungs 34 ist größer als die Tiefe 26 der napfartigen Aussparung 24 des Kopfteils 12. Der Durchmesser 36 des zapfenartigen Vorsprungs 34 ist kleiner als der kleinste Durchmesser 28 der napfartigen Aussparung 24.

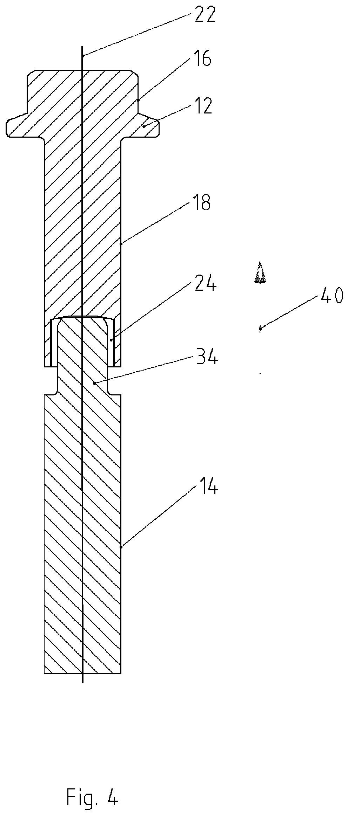

Dies ist in Figur 4 deutlich zu erkennen. Figur 4 zeigt einen Kopfteil 12 und einen Schneidteil 14, wobei der Kopfteil 12 und der Schneidteil 14 axial fluchtend entlang der Mittellängsachse 22 angeordnet sind. Der zapfenartige Vorsprung 34 des Schneidteils 14 ist dabei in die napfartige Aussparung 24 des Kopfteils 12 eingeschoben. Das Einschieben des zapfenartigen Vorsprungs 34 in die napfartige Aussparung 24 kann in Richtung des Pfeils 40 erfolgen. Es ist deutlich zu erkennen, dass der zapfenartige Vorsprung 34 eine größere Länge 38 aufweist, als die Tiefe 26 der napfartigen Aussparung 24. Ferner ist zu erkennen, dass die napfartige Aussparung 24 einen größeren Durchmesser 28 als der Durchmesser 36 des zapfenartigen Vorsprungs 34 aufweist. Figur 4 zeigt den Kopfteil 12 und den Schneidteil 14 dabei vor Durchführung des Fließpressprozesses.

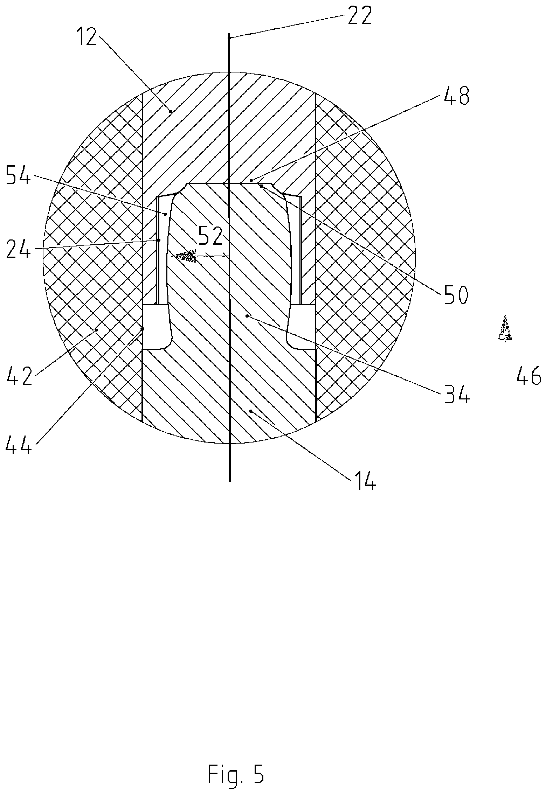

Figur 5 zeigt einen vergrößerten Ausschnitt eines Kopfteils 12, wobei in die napfartige Aussparung 24 des Kopfteils 12 der zapfenartige Vorsprung 34 des Schneidteils 14 eingeführt ist. Die beiden Teile, nämlich der Kopfteil 12 und der Schneidteil 14 sind in einer Matrize 42 einer Mehrstufenpresse angeordnet und stützen sich an einer Umfangsfläche 44 der Matrize 42 auf. Figur 5 zeigt den Kopfteil 12 und den Schneidteil 14 zu Beginn eines Fließpressprozesses. Die Wirkrichtung der Maschine ist durch den Pfeil 46 dargestellt. Wenn nun der Schneidteil 14 weiter in Richtung des Pfeiles 46 auf den Kopfteil 12 über die in Figur 4 dargestellte Position hinaus bewegt wird, dringt eine Stirnseite 48 des zapfenartigen Vorsprungs 34 in eine Bodenfläche 50 der napfartigen Aussparung 24 zumindest teilweise ein. Da ein weiteres axiales Ausweichen in Richtung des Pfeiles 46 vom Boden 50 der napfartigen Aussparung 24 begrenzt wird, kann Material des zapfenartigen Vorsprungs 34 in Richtung des Pfeiles 52 in einen Hohlraum 54 zwischen Kopfteil 12 und zapfenartigen Vorsprung 34 des Schneidteils 14 nach radial außen, das heißt quer zum Pfeil 46 fließen.

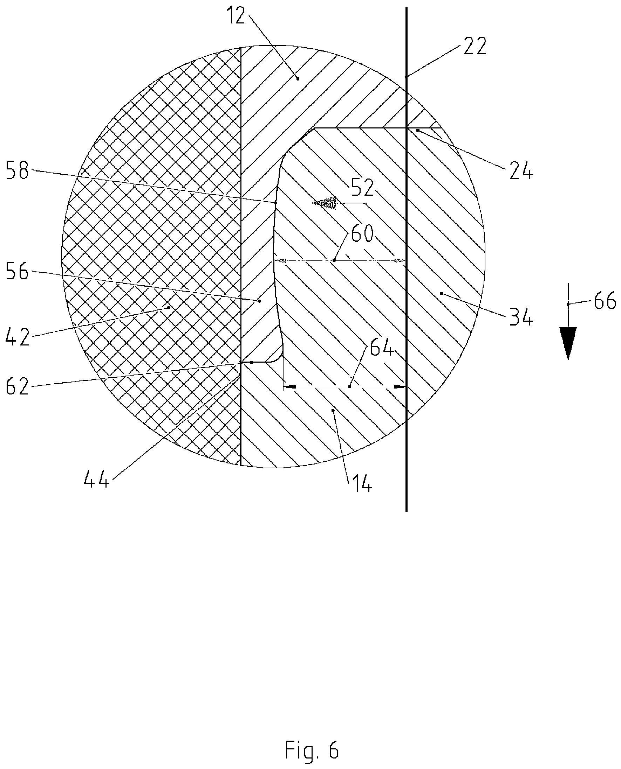

Figur 6 zeigt einen vergrößerten Ausschnitt einer Fließpressverbindung am Ende des Fließpressprozesses. Der Kopfteil 12 und der Schneidteil 14 der Zweistahlschraube 10 sind noch immer in der Matrize 42 einer Mehrstufenpresse angeordnet und stützen sich an der Umfangsfläche 44 der Matrize ab. Es ist deutlich zu erkennen, was der Fließprozess in Richtung des Pfeiles 52 bewirkt: Material des zapfenartigen Vorsprungs 34 kann quer zur Wirkrichtung der Presse, das heißt quer zur durch den Pfeil 46 dargestellten Richtung fließen. Das Material fließt dabei in den in Figur 5 gezeigten Hohlraum 54 ein und füllt ihn aus.

Die Bewegung einer Seitenwand 56 des Kopfteils 12, welche die napfartige Aussparung 24 bildet, wird durch die Umfangsfläche 44 der Matrize 42 begrenzt, da sich der Kopfteil und der Schneidteil 14 an der Umfangsfläche 44 der Matrize 42 abstützen. Zum Ende des Fließpressprozesses füllt der zapfenartige Vorsprung 34 die napfartige Aussparung 24 vollständig aus.

Wie in Figur 6 zu erkennen, weist der zapfenartige Vorsprung 34 dann eine Ausbauchung 58 auf. Im Bereich dieser Ausbauchung 58 weist der zapfenartige Vorsprung 34 nach dem Fließpressprozess einen Durchmesser 60 auf. An einem Übergangsbereich 62 zum zapfenartigen Vorsprung 34 weist der zapfenartige Vorsprung 34 ferner einen Durchmesser 64 auf. Der Durchmesser 60 ist größer als der Durchmesser 64, sodass der zapfenartige Vorsprung 34 die napfartige Aussparung 24 in axialer Richtung hinterschneidet. Somit ist ein Herausziehen des zapfenartigen Vorsprungs 34 aus der napfartigen Aussparung 24 in Richtung des Pfeiles 66 nicht mehr möglich.

Da beim Herstellen von Bohrungen beziehungsweise da beim Einsatz von Zweistahlschrauben 10 auch hohe Drehmomente übertragen werden müssen, weist die napfartige Aussparung des Kopfteils 12 wie bereits weiter oben dargelegt ein in Figur 7 gezeigtes Mitnahmeprofil 68 auf. Das Mitnahmeprofil 68 wird von Kreisabschnitten 70 und zwischen den Kreisabschnitten 70 angeordneten Mitnahmeabschnitten 72 gebildet. In Figur 7 sind jeweils drei Kreisabschnitte 72 vorgesehen, sodass diese in einem Winkel 74 von etwa 120 Grad zueinander angeordnet sind. Im Bereich der Kreisabschnitte 70 weist die napfartige Aussparung 24 einen Radius 76 auf, welcher im Bereich der Kreisabschnitte 70 konstant ist. Im Bereich der Mitnahmeabschnitte 72 weist die napfartige Aussparung 24 ferner einen Radius 78 auf, welcher sich zur Mitte 80 der Mitnahmeabschnitte 72 stetig verringert. Dieser sich verringernde Radius 78 definiert den Abstand, welcher sich im Bereich der Mitnahmeabschnitte 72 hin zu einem Bauch 77 verringert. Die Mitnahmeabschnitte 72 sind als umgekehrte Kreisabschnitte ausgebildet und können auch durch einen von außen angelegten Radius 79 definiert werden.

Wenn nun ein Schneidteil 14 beziehungsweise ein zapfenartiger Vorsprung 34 eines Schneidteils 14 in die napfartige Aussparung 24 des Kopfteils 12 für den Fließpressprozess eingeführt wird, ist es besonders bevorzugt, wenn der Durchmesser 36 des zapfenartigen Vorsprungs kleiner oder gleich dem kleinsten Durchmesser der napfartigen Aussparung 24 im Bereich der Mitte 80 der Mitnahmeabschnitte 72 gewählt ist, sodass der zapfenartige Vorsprung 34 problemlos in die napfartige Aussparung 24 eingeführt werden kann. Beim Fließpressprozess kann dann Material des zapfenartigen Vorsprungs 34 in die Hohlräume 54, welche durch die Kreisabschnitte 70 definiert werden, ausweichen. Aufgrund des Mitnahmeprofils 68 kann dann zusätzlich zu den Hinterschneidungen durch die Ausbauchung 58, welche eine Verbindung in axialer Richtung sicherstellt, eine Drehmomentübertragung in radialer Richtung bereitgestellt werden.

## Patentansprüche

1. Zweistahlschraube (10), mit einem Kopfteil (12) und mit einem Schneidteil (14), wobei der Kopfteil (12) aus einem korrosionsbeständigen Werkstoff hergestellt ist und einen Schraubenkopf (16) und einen Schaftabschnitt (18) aufweist und wobei der Schneidteil (14) aus einem härtbaren Werkstoff hergestellt ist, wobei der Schneidteil (14) einen zapfenartigen Vorsprung (34) aufweist und wobei der Kopfteil (12) am Schaftabschnitt (18) eine napfartige Aussparung (24) aufweist, wobei der zapfenartige Vorsprung (34) in der napfartigen Aussparung (24) angeordnet ist, **dadurch gekennzeichnet, dass** der Kopfteil (12) im Bereich des Schaftabschnitts (18) mit dem Schneidteil (14) mittels Fließpressen dauerhaft verbunden ist und dass die napfartige Aussparung (24) im Querschnitt ein Mitnahmeprofil (68) mit mehreren, vorzugsweise mit drei Mitnahmeabschnitten (72) aufweist, wobei der zapfenartige Vorsprung (34) den Kopfteil (12) im Bereich der napfartigen Aussparung (24) zumindest abschnittsweise axial hinterschneidet.

2. Zweistahlschraube (10) nach Anspruch 1, **dadurch gekennzeichnet, dass** der zapfenartige Vorsprung (34) die napfartige Aussparung (24) vollständig ausfüllt.

3. Zweistahlschraube (10) nach Anspruch 1 oder 2, **dadurch gekennzeichnet, dass** der Schneidteil (14) gehärtet ist und eine Bohrspitze aufweist.

4. Zweistahlschraube (10) nach einem der vorhergehenden Ansprüche, **dadurch gekennzeichnet, dass** zwischen den Mitnahmeabschnitten (72) Kreisabschnitte (70) vorgesehen sind.

5. Zweistahlschraube (10) nach Anspruch 4, **dadurch gekennzeichnet, dass** die Mitnahmeabschnitte (72) und die Kreisabschnitte (70) in einem Winkel (74) von 120° zueinander im Umfang der Aussparung (24) angeordnet sind.

6. Zweistahlschraube (10) nach einem der vorhergehenden Ansprüche, **dadurch gekennzeichnet, dass** die napfartige Aussparung (24) im Bereich der Kreisabschnitte (70) einen ersten Radius (76) und im Bereich der Mitnahmeabschnitte (72) einen zweiten, sich verringernden Radius (78) aufweist, der kleiner ist als der erste Radius (76).

7. Verfahren zum Herstellen einer Zweistahlschraube (10) bestehend aus einem Kopfteil (12) aus korrosionsbeständigem Werkstoff, der einen Schraubenkopf (16) und einen Schaftabschnitt (18) aufweist, und einem Schneidteil (14) aus einem härtbaren Werkstoff umfassend die folgenden Schritte:
- Einpressen einer napfartigen Aussparung (24) mit einer vorgegebenen Tiefe (26) in den Kopfteil (12) im Bereich des Schaftabschnitts (18) oder Anformen eines zapfenartigen Vorsprungs mit einer vorgegebenen Länge an den Schaftabschnitt (18);
- Herstellen des Schneidteils (14) mit einem zapfenartigen Vorsprung (34) mit einer Länge (38), die größer ist als die Tiefe (26) der Aussparung (24) oder Einpressen einer napfartigen Aussparung in den Schneidteil (14) mit einer Tiefe, die kleiner ist als die Länge des zapfenartigen Vorsprungs des Schaftabschnitts (18);
- Einführen des Vorsprungs (34) in die Aussparung (24) und Verbinden des Kopfteils (12) und des Schneidteils (14) mittels Fließpressen, so dass der zapfenartige Vorsprung (34) die napfartige Aussparung (24) vollständig ausformt, wobei beim Einpressen der napfartigen Aussparung (24) ein Mitnahmeprofil (68) mit Mitnahmeabschnitten (72) eingepresst wird, wobei beim Verbinden des Kopfteils (12) und des Schneidteils (14) der zapfenartige Vorsprung (34) die napfartige Aussparung (24) zumindest abschnittsweise axial hinterschneidet.

8. Verfahren nach Anspruch 7, **dadurch gekennzeichnet, dass** die napfartige Aussparung (24) in einem Flächenverhältnis von etwa 55 % bis etwa 75 % zu einer Querschnittsfläche des Schaftabschnitts (18) in den Kopfteil (12) oder in den Schneidteil (14) eingepresst wird.

9. Verfahren nach Anspruch 7 oder 8, **dadurch gekennzeichnet, dass** der zapfenzapfenartige Vorsprung (34) kreiszylindrisch hergestellt wird.

10. Verfahren nach wenigstens einem der Ansprüche 7 bis 9, **dadurch gekennzeichnet, dass** nach dem Verbinden ein Gewinde auf den Schaftabschnitt (18) und den Schneidteil (14) aufgerollt wird.

11. Verfahren nach einem der Ansprüche 7 bis 10, **dadurch gekennzeichnet, dass** der Kopfteil (12) und der Schneidteil (14) vor dem Verbinden axial fluchtend angeordnet werden.

12. Verfahren nach einem der Ansprüche 7 bis 11, **dadurch gekennzeichnet, dass** das Herstellen des Schneidteils (14) und das Verbinden mit dem Kopfteil (12) in einer Mehrstufenpresse durchgeführt werden.

## Claims

1. Two-steel screw (10) comprising a head part (12) and a cutting part (14), the head part (12) being made of a corrosion-resistant material and having a screw head (16) and a shank portion (18), and wherein the cutting part (14) is made of a hardenable material, wherein the cutting part (14) has a pin-like projection (34) and wherein the head part (12) has a cup-shaped recess (24) on the shank portion (18), wherein the pin-like projection (34) is arranged in the cup-shaped recess (24), **characterized in that** the head part (12) is permanently connected to the cutting part (14) in the region of the shank portion (18) by way of impact extrusion and **in that**, in cross-section, the cup-shaped recess (24) has an engaging profile (68) with a plurality of, preferably three, engaging segments (72) wherein the pin-like projection (34) axially undercuts the head part (12) in the region of the cup-shaped recess (24) at least partially.

2. The two-steel screw (10) according to claim 1, **characterized in that** the pin-like projection (34) fills the cup-shaped recess (24) completely.

3. The two-steel screw (10) according to claim 1 or 2, **characterized in that** the cutting part (14) is hardened and has at least one drill bit.

4. The two-steel screw (10) according to one of the preceding claims, **characterized in that** circular segments (70) are provided between the engaging segments (72).

5. The two-steel screw (10) according to claim 4, **characterized in that** the engaging segments (72) and the circular segments (70) are arranged at an angle (74) of 120° relative to one another in the circumference of the recess (24).

6. The two-steel screw (10) according to one of the preceding claims, **characterized in that** the cup-shaped recess (24) has a first radius (76) in the region of the circular segments (70) and has a second reducing radius (78) which is smaller than the first radius (76) in the region of the engaging segments (72).

7. Method for producing a two-steel screw (10) consisting of a head part (12) made of a corrosion-resistant material and having a screw head (16) and a shank portion (18), and a cutting part (14) consisting of a hardenable material, comprising the following steps:
- pressing a cup-shaped recess (24) with a predetermined depth (26) into the head part (12) in the region of the shank portion (18) or forming a pin-like projection with a predetermined length on the shank portion (18);
- producing the cutting part (14) with a pin-like projection (34) with a length (38) greater than the depth (26) of the recess (24) or pressing a cup-shaped recess into the cutting part (14) with a depth smaller than the length of the pin-like projection of the shank portion (18) ;
- introducing the projection (34) into the recess (24) and connecting the head part (12) and the cutting part (14) by means of impact extrusion, so that the pin-like projection (34) completely fills the cup-shaped recess (24), wherein an engaging profile (68) with engaging segments (72) is pressed in when the cup-shaped recess (24) is pressed in, wherein the pin-like projection (34) axially undercuts the head part (12) in the region of the cup-shaped recess (24) at least partially when connecting the head part (12) and the cutting part (14).

8. The method according to claim 7, **characterized in that** the cup-shaped recess (24) is pressed into the head part (12) or into the cutting part (14) in an area ratio of approximately 55% to approximately 75% to a cross-sectional area of the shank portion (18).

9. The method according to claim 7 or 8, **characterized in that** the pin-like projection (34) is produced in a circular cylindrical shape.

10. The method according to at least one of claims 7 to 9, **characterized in that** after the connection a thread is rolled onto the shank portion (18) and the cutting part (14).

11. The method according to at least one of claims 7 to 10, **characterized in that** the head part (12) and the cutting part (14) are arranged axially in alignment before connection.

12. The method according to at least one of claims 7 to 11, **characterized in that** the production of the cutting part (14) and the connection to the head part (12) are carried out in a multi-stage press.

## Revendications

1. Vis composée de deux aciers (10), comprenant une partie tête (12) et une partie tranchant (14), la partie tête (12) étant réalisée dans un matériau résistant à la corrosion et comprenant une tête de vis (16) et une section de tige (18) et la partie tranchant (14) étant réalisée dans un matériau apte à la trempe, la partie tranchant (14) comprenant une partie saillante (34) du type tourillon et la partie tête (12) comprenant sur la section de tige (18) un évidement cupuliforme (24), la partie saillante (34) du type tourillon étant agencée dans l'évidement cupuliforme (24), **caractérisée en ce que** la partie tête (12) est reliée de manière permanente à la partie tranchant (14) par assemblage par extrusion dans la zone de la section de tige (18) et **en ce que** l'évidement cupuliforme (24) présente en section transversale un profil d'entraînement (68) pourvu de plusieurs, de préférence de trois sections d'entraînement (72), la partie saillante (34) du type tourillon croisant au moins en partie axialement par l'arrière la partie tête (12) dans la zone de l'évidement cupuliforme (24).

2. Vis composée de deux aciers (10) selon la revendication 1, **caractérisée en ce que** la partie saillante (34) du type tourillon remplit entièrement l'évidement cupuliforme (24).

3. Vis composée de deux aciers (10) selon la revendication 1 ou 2, **caractérisée en ce que** la partie tranchant (14) est trempée et présente une pointe de perçage.

4. Vis composée de deux aciers (10) selon l'une quelconque des revendications précédentes, **caractérisée en ce que** des sections circulaires (70) sont prévues entre les sections d'entraînement (72).

5. Vis composée de deux aciers (10) selon la revendication 4, **caractérisée en ce que** les sections d'entraînement (72) et les sections circulaires (70) sont agencées selon un angle (74) de 120° les unes par rapport aux autres dans la périphérie de l'évidement (24).

6. Vis composée de deux aciers (10) selon l'une quelconque des revendications précédentes, **caractérisée en ce que** l'évidement cupuliforme (24) comprend dans la zone des sections circulaires (70) un premier rayon (76) et dans la zone des sections d'entraînement (72) un deuxième rayon (78) se rétrécissant, qui est plus petit que le premier rayon (76).

7. Procédé de fabrication d'une vis composée de deux aciers (10) constituée d'une partie tête (12) réalisée dans un matériau résistant à la corrosion, qui comprend une tête de vis (16) et une section de tige (18), et une partie tranchant (14) réalisée dans un matériau apte à la trempe, comprenant les étapes suivantes consistant à :
- ménager par enfoncement un évidement cupuliforme (24) présentant une profondeur (26) prédéfinie dans la partie tête (12) dans la zone de la section de tige (18) ou former une partie saillante du type tourillon présentant une longueur prédéfinie sur la section de tige (18) ;
- fabriquer la partie tranchant (14) comprenant une partie saillante (34) du type tourillon présentant une longueur (38) qui est supérieure à la profondeur (26) de l'évidement (24) ou ménager par enfoncement un évidement en forme de tourillon dans la partie tranchant (14) présentant une profondeur qui est inférieure à la longueur de la partie saillante du type tourillon de la section de tige (18) ;
- introduire la partie saillante (34) dans l'évidement (24) et relier la partie tête (12) et la partie tranchant (14) par assemblage par extrusion, de sorte que la partie saillante (34) du type tourillon forme intégralement l'évidement cupuliforme (24), un profil d'entraînement (68) présentant des sections d'entraînement (72) étant ménagé par enfoncement lorsque l'évidement cupuliforme (24) est ménagé par enfoncement, la partie saillante (34) du type tourillon croisant axialement par l'arrière au moins en partie l'évidement cupuliforme (24), lors de la liaison de la partie tête (12) et de la partie tranchant (14).

8. Procédé selon la revendication 7, **caractérisé en ce que** l'évidement cupuliforme (24) est ménagé par enfoncement dans la partie tête (12) ou dans la partie tranchant (14) selon un rapport de surface de sensiblement 55 % à sensiblement 75 % par rapport à une superficie de section de la section de tige (18).

9. Procédé selon la revendication 7 ou 8, **caractérisé en ce que** la partie saillante (34) du type tourillon est de forme cylindrique circulaire.

10. Procédé selon au moins l'une des revendications 7 à 9, **caractérisé en ce qu'**un filet est enroulé sur la section de tige (18) et la partie tranchant (14) après la liaison.

11. Procédé selon l'une quelconque des revendications 7 à 10, **caractérisé en ce que** la partie tête (12) et la partie tranchant (14) sont agencées en alignement axial avant d'être reliées.

12. Procédé selon l'une quelconque des revendications 7 à 11, **caractérisé en ce que** la fabrication de la partie tranchant (14) et la liaison à la partie tête (12) sont réalisées dans une presse à étages multiples.
